# EUROPÄISCHE PATENTSCHRIFT

(11) **EP 0 787 909 B1**
(45) Veröffentlichungstag und Bekanntmachung des Hinweises auf die Patenterteilung: **04.09.2002**
(21) Anmeldenummer: 97810003.0
(22) Anmeldetag: 07.01.1997
(51) Int. Cl.: F16B 37/04

(54) **Klemmvorrichtung für teleskopisch zusammengesetzte Profilrohre**
Clamp device for connecting telescopic profiles
Dispositif de fixation pour profilés assemblés de façon télescopique

(30) Priorität: 05.02.1996 CH 29396
(43) Veröffentlichungstag der Anmeldung: 06.08.1997
(73) Patentinhaber: GEBERIT TECHNIK AG, 8645 Jona (CH)
(72) Erfinder: Marti, Silvio, 8640 Rapperswil (CH); Mahler, Alfred, 8645 Jona (CH); Schmucki, Peter, 8733 Eschenbach (CH)
(74) Vertreter: Groner, Manfred

(56) Entgegenhaltungen:
- BE-A- 678 205
- DE-A- 2 637 749
- US-A- 4 741 582

## Beschreibung

Die Erfindung betrifft eine Klemmvorrichtung für teleskopisch zusammengesetzte Profilrohre, insbesondere eines Traggestells für Sanitärapparate, gemäß dem Oberbegriff des Anspruchs 1, wie aus der US-A-4 741582 bekannt geworden.

Im Stand der Technik ist ferner durch die DE-A-26 37 749 ein Einbau- Traggerüst für Hohlkörperwände zur Befestigung von wandhängenden Sanitäreinrichtungen bekannt geworden, das eine Klemmvorrichtung aufweist. Diese Klemmvorrichtung besteht aus einem mittels einer Spreizfeder positionierbaren U-förmigen Klemmbauteil, das mittels einer Befestigungsschraube an die einen Schlitz aufweisende Innenfläche eines Profilrohres anlegbar ist. Zur Befestigung von teleskopisch verschiebbaren Tragfüssen und einer oberen Traverse sind an diesem Traggerüst zudem Druckschrauben angebracht, die jeweils in eine Gewindebohrung eines Profilrohres eingeschraubt sind.

Der Erfindung liegt die Aufgabe zugrunde, eine Vorrichtung der genannten Art zu schaffen, die eine einfachere und flexibele aber dennoch sichere Montage eines Traggestells ermöglicht.

Die erfindungsgemässe Klemmvorrichtung ist gekennzeichnet durch ein Tragorgan, auf dem das Klemmteil in wenigstens zwei unterschiedlichen Stellungen drehsicher angeordnet werden kann, wobei in einer Stellung das Klemmteil in einen Längsschlitz eines Profilrohres eingreifen kann. Die erfindungsgemässe Klemmvorrichtung weist den besonderen Vorteil auf, dass sie auch im Bereich der Tragfüsse und Ecken verwendbar ist und auch eine Befestigung an einem äusseren Profilrohr bei gleichzeitiger Aufrechterhaltung der teleskopischen Verschiebbarkeit möglich ist. Zusätzliche Druckschrauben zur Befestigung der Tragfüsse oder einer oberen Traverse sind nicht mehr nötig. Die Profilrohre können über ihre gesamte Länge geschlitzt sein, was die Herstellung und auch die Lagerhaltung wesentlich vereinfacht.

Eine wesentliche Reduktion der Herstellungskosten ergibt sich dann, wenn das Tragorgan aus einem geeigneten Kunststoff, insbesondere als Spritzgussteil hergestellt ist. Sind die Federn am Teil des Tragorgans angeformt, so ergibt sich eine weitere Senkung der Herstellungskosten. Das Tragorgan bildet dann mit der Feder eine Einheit, was die Montage wesentlich vereinfacht. Es hat sich gezeigt, dass die Montage dann besonders reibungslos möglich ist, wenn das Tragorgan im wesentlichen allseitig Anfasungen aufweist. Das Tragorgan lässt sich dann besonders leicht im Rohrprofil verschieben. Bei einem aus Spritzgussteil hergestellten Tragorgan sind solche Anfasungen ohne höhere Herstellungskosten möglich.

Weitere Vorteile ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: eine teilweise geschnittene Ansicht einer erfindungsgemässen Klemmvorrichtung
- Figur 2: eine Ansicht gemäss Figur 1, jedoch mit einer anderen Stellung des Klemmteils, wobei die Befestigungsschraube weggelassen ist,
- Figur 3: eine gleiche Ansicht der Klemmvorrichtung mit einer Anordnung nach einer dritten Variante, wobei auch hier die Befestigungsschraube weggelassen ist,
- Figur 4: eine Draufsicht auf das Tragorgan,
- Figur 5: eine Draufsicht auf das Tragorgan mit eingesetztem Klemmteil,
- Figur 6: eine Ansicht gemäss Figur 5, jedoch mit dem Klemmteil in einer anderen Stellung,
- Figur 7: eine weitere Ansicht des Tragorgans,
- Figur 8: ein Schnitt durch das Tragorgan,
- Figur 9: ein weiterer Schnitt durch das Tragorgan, und
- Figur 10: eine Teilansicht zweier teleskopisch zusammengesetzter Profilrohre.

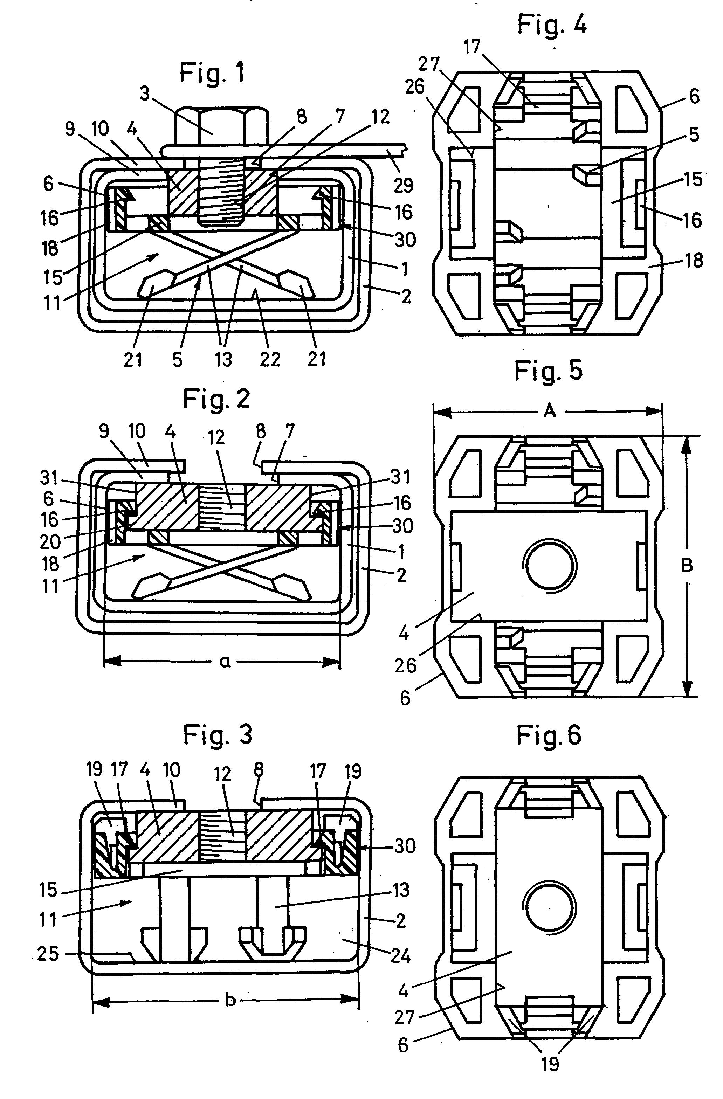

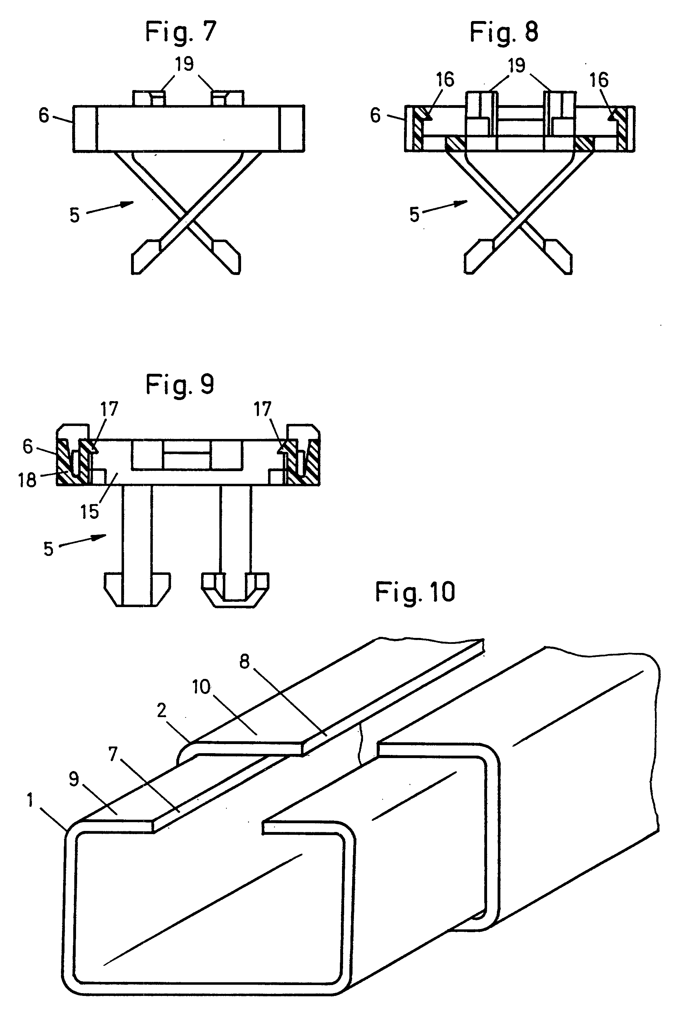

Die Figur 1 zeigt ein Profilrohr 1 mit einem Längsschlitz 7, das teleskopisch verschiebbar in ein äusseres Profilrohr 2 eingesetzt ist. Das Profilrohr 2 ist mit einem Längsschlitz 8 versehen, der etwas enger ist als der Längsschlitz 7 und parallel zu diesem verläuft. Beide Profilrohre sind wie ersichtlich im Querschnitt C-förmig und bilden beispielsweise Tragstützen an einem Montagegestell für Sanitärapparate. Das innere Profilrohr 1 ist dann beispielsweise ein Tragbein, das gemäss Figur 10 verschiebbar unten aus dem Profilrohr 2 herausragt.

Zur Befestigung eines Teils 29, beispielsweise einer Traverse oder dergleichen am Profilrohr 2 ist eine Klemmvorrichtung 11 vorgesehen, die ein Tragorgan 30, ein klotzförmiges Klemmteil 4 aus Metall sowie eine Befestigungsschraube 3 aufweist. Das Klemmteil 4 greift wie ersichtlich in den Schlitz 7 des Profilrohrs 1 ein und liegt mit seiner Oberseite 28 an Wandungen 10 des äusseren Profilrohres 2 an. Die Befestigungsschraube 3 ist in eine Gewindebohrung 12 des Klemmteils 4 eingeschraubt, und klemmt das Teil 29 gegen die Wandungen 10. Bei fest angezogener Befestigungsschraube ist das Klemmteil 4 mit dem Teil 29 und der Schraube 3 unverschiebbar am äusseren Profilfohr 2 festgelegt. Die Breite des Klemmteils 4 ist etwas kleiner als die Breite des Längschlitzes 7, so dass bei festgeklemmtem Teil 29 das innere Profilrohr 1 unbegrenzt teleskopisch verschiebbar ist.

Das Tragorgan 30 ist insbesondere in den Figuren 4 bis 9 in seinen Einzelheiten dargestellt und ist vorzugsweise ein Spritzgussteil aus geeignetem Kunststoff, beispielsweise Polyäthylen. Das Tragorgan 30 weist einen Halteteil 6 auf, an dem unterseitig zwei schräg verlaufende Beine 13 angeformt sind. Diese Beine 13 bilden eine Feder 5, welche den Halteteil 6 und das auf diesem aufgesetzte Klemmteil 4 im Profil 1 gleitfähig abstützt. Am Ende der Beine 13 sind Füsse 21 angeformt, die allseitig angefast sind, damit sie ohne zu haken unter federnder Spannung an der Innenseite des Profilrohres 1 gleiten können. Der Halteteil 6 ist in Draufsicht gemäss den Figuren 4 bis 6 rechteckig und besitzt eine bestimmte Breite A sowie eine bestimmte Breite B. Die Breite A ist etwas kleiner als die innere Breite a (Figur 2) des inneren Profilrohrs 1 und die Breite B etwas kleiner als die innere Breite b (Figur 3) des äusseren Profilrohrs 2.

Der Halteteil 6 weist oberseitig zwei quer zueinander verlaufende Vertiefungen 26 und 27 auf, die seitlich jeweils mit zwei gegenüberliegenden Rastzungen 16 bzw. 17 versehen sind. Diese Vertiefungen 26 und 27 dienen zur Aufnahme des Klemmteils 4 in der in Figur 5 gezeigten querverlaufenden Stellung oder in der in Figur 6 gezeigten in Längsrichtung verlaufenden Stellung. Das Klemmteil 4 besitzt gemäss Figur 2 an jeder Schmalseite 31 einen seitlichen Rastvorsprung 20. Um das Klemmteil 4 am Halter 6 zu befestigen, wird es von oben in die Vertiefung 26 oder 27 eingesetzt und nach unten gedrückt, bis die Rastzungen 16 bzw. 17 an den Rastvorsprüngen 20 eingerastet sind. Das Klemmteil 4 ist dann entweder in der Stellung gemäss Figur 5 oder in der Stellung gemäss Figur 6 drehfest und unverlierbar am Tragorgan 11 befestigt. Der Halteteil 6 ist wie gezeigt an seinem Umfang angefast und lässt sich damit im Profilrohr 1 oder 2 ohne Schwierigkeiten verschieben.

Das Klemmteil 4 überragt in beiden gezeigten Stellungen die Oberseite des Halteteils 6 und ebenfalls vier angeformte Vorsprünge 19 um wenigstens die Wandstärke eines Profilrohres 1 bzw. 2. Bei der Anwendung gemäss Figur 1 ist das Klemmteil 4 gemäss Figur 6 in Längsrichtung am Halteteil 6 gehalten und ebenfalls wie in Figur 6 gezeigt in das innere Profilrohr 1 eingesetzt. Diese Anordnung dient wie bereits oben angedeutet dazu, ein Teil 29 am äusseren Profilrohr 2 festzuklemmen, wobei das innere Profilrohr 1 weiterhin teleskopisch verschiebbar ist.

Sollen nun die beiden Profilrohre 1 und 2 fest miteinander verbunden werden, so wird das Klemmteil 4 gemäss Figur 5 in die Vertifung 26 eingesetzt und das Tragorgan 30 in das innere Profilrohr 1 eingeschoben. Das Klemmteil 4 liegt nun gemäss Figur 2 innenseitig an Wandungen 9 des inneren Profilrohrs 1 an. Wird nun eine Befestigungsschraube 3 durch die Schlitze 8 und 7 in die Gewindebohrung 12 eingeschraubt und festgezogen, so werden die Wandungen 9 und 10 miteinander verklemmt, so dass die Profilrohre 1 und 2 in Längsrichtung nicht mehr gegeneinander verschoben werden können. Auch in diesem Fall kann zusätzlich noch ein Teil 29 entsprechend Figur 1 am Profilrohr 2 festgeklemmt werden. Die Verbindung kann jederzeit gelöst und verschoben werden. Hierbei gewährleistet das Tragorgan 30 die genaue Postitionierung und Führung des Klemmteils 4.

Die Klemmvorrichtung 11 ermöglicht auch das Festklemmen eines Teils 29 allein am äusseren Profilrohr 2 oder am inneren Profilrohr 1. Die Figur 3 zeigt die Möglichkeit, ein Teil 29 am äusseren Profilrohr 2 festzuklemmen. Das Klemmteil 4 ist gemäss Figur 6 in die Vertiefung 27 eingerastet und das Tragorgan 30 ist quer in den Innenraum 24 des Profilrohrs 2 eingeschoben. Die Beine 13 sind somit an der Innenseite 25 des Profilrohrs 2 gleitverschieblich und federnd abgestützt. Das nun quer zur Längsrichtung des Profilrohres 2 verlaufende Klemmteil 4 liegt innenseitig an den Wandungen 9 an. Mittels einer Befestigungsschraube 3 kann, wie bei der Ausführung gemäss Figur 1, ein Teil 29 an der Aussenseite des Profilrohres 2 festgeklemmt werden. Analog ist eine Befestigung am inneren Profilrohr 1 möglich.

Wie ersichtlich, sind mit gleichen Teilen an den Profilrohren 1 und 2 unterschiedliche Befestigungsarten möglich. Der Montagevorgang ist jeweils im wesentlichen gleich und sehr einfach. Wesentlich ist auch, dass die Profilrohre 1 und 2 über die ganze Länge den gleichen Querschnitt aufweisen und somit beliebig lange Abschnitte sein können. Dies ermöglicht eine sehr kostengünstige Herstellung und eine vereinfachte Lagerhaltung.

## Patentansprüche

1. Klemmvorrichtung für teleskopisch zusammengesetzte Profilrohre (1, 2), insbesondere eines Traggestells für Sanitärapparate, wobei die Profilrohre (1, 2) in Längsrichtung geschlitzt sind und eine Befestigungsschraube (3) der klemmvorrichtung in ein Klemmteil (4) eingreift, das über ein Tragorgan(20) mittels einer Feder (5) in einem der Profilrohre (1, 2) abstützbar ist, **dadurch gekennzeichnet, dass**, das Klemmteil (4) auf dem Tragorgan (30) in wenigstens zwei unterschiedlichen Stellungen drehsicher angeordnet werden kann, wobei bei einer bestimmte Orientierung des Tragorgans (30) gegenüber der Profilrohrer (1,2) das Klemmteil (4) in einer der wenigstens zwei unterchindlicher Stellunger in einen der Längsschlitze (7, 8) eines der Profilrohre (1, 2) eingreifen kann.

2. Klemmvorrichtung nach Anspruch 1, **dadurch gekennzeichnet, dass** das Tragorgan (30) aus einem geeigneten Kunststoff hergestellt ist.

3. Klemmvorrichtung nach einem der Ansprüche 1 oder 2, **dadurch gekennzeichnet, dass** die Feder (5) ein Teil des Tragorgans (30) ist.

4. Klemmvorrichtung nach einem der Ansprüche 1 bis 3, **dadurch gekennzeichnet, dass** das Tragorgan (30) einen Halteteil (6) aufweist, auf dem das Klemmteil (4) gelagert ist.

5. Klemmvorrichtung nach einem der Ansprüche 1 bis 4, **dadurch gekennzeichnet, dass** das Klemmteil (4) auf das Tragorgan (30) aufgerastet ist.

6. Klemmvorrichtung nach einem der Ansprüche 1 bis 5, **dadurch gekennzeichnet, dass** das Tragorgan (30) aus Kunststoff und das Klemmteil (4) aus einem geeigneten Metall hergestellt ist.

7. Klemmvorrichtung nach einem der Ansprüche 1 bis 6, **dadurch gekennzeichnet, dass** das Tragorgan (30) in Draufsicht etwa rechteckig ausgebildet ist und eine Breite (A) sowie eine Länge (B) aufweist, wobei die Breite (A) etwa der Innenweite (a) eines inneren Profilrohrs (1) und die Länge (B) der Innenweite (b) eines äusseren Profilrohrs (2) entspricht.

8. Klemmvorrichtung nach einem der Ansprüche 1 bis 7, **dadurch gekennzeichnet, dass** das Tragorgan ein Spritzgussteil ist und die Feder (5) durch angeformte Beine (13) gebildet ist.

9. Klemmvorrichtung nach einem der Ansprüche 1 bis 8, **dadurch gekennzeichnet, dass** das Tragorgan (30) im wesentlichen allseitig Anfasungen aufweist.

10. Klemmvorrichtung nach einem der Ansprüche 1 bis 9, **dadurch gekennzeichnet, dass** das Klemmteil (4) in zwei etwa rechwinklig zueinander verlaufenden Drehstellungen am Tragorgan (30) befestigbar ist.

11. Klemmvorrichtung nach einem der Ansprüche 1 bis 10, **dadurch gekennzeichnet, dass** das Klemmteil (4) an einer Oberseite des Tragorgans (30) um wenigstens die Wandstärke eines Profilrohres (1, 2) vorsteht.

## Claims

1. A clamping device for telescopically assembled profiled pipes (1, 2), in particular a supporting frame for sanitary apparatus, the profiled pipes (1, 2) being slotted in the longitudinal direction and a fastening screw (3) of the clamping device engaging in a clamping part (4) which may be supported by way of a supporting element (30) in one of the profiled pipes (1, 2) by means of a spring (5), **characterized in that** the clamping part (4) can be arranged in at least two different positions on the supporting element (30) in torsion-resistant manner, it being possible for the clamping part (4) to engage in one of the longitudinal slots (7, 8) of one of the profiled pipes (1, 2) in one of the at least two different positions when the supporting element (30) has a particular orientation with respect to the profiled pipes (1, 2).

2. A clamping device according to Claim 1, **characterized in that** the supporting element (30) is manufactured from a suitable plastics material.

3. A clamping device according to one of Claims 1 and 2, **characterized in that** the spring (5) is part of the supporting element (30).

4. A clamping device according to one of Claims 1 to 3, **characterized in that** the supporting element (30) has a holding part (6) on which the clamping part (4) is mounted.

5. A clamping device according to one of Claims 1 to 4, **characterized in that** the clamping part (4) is latched onto the supporting element (30).

6. A clamping device according to one of Claims 1 to 5, **characterized in that** the supporting element (30) is manufactured from plastics material and the clamping part (4) is manufactured from a suitable metal.

7. A clamping device according to one of Claims 1 to 6, **characterized in that** the supporting element (30) is approximately rectangular as seen in plan view and has a width (A) and a length (B), the width (A) corresponding approximately to the inside width (a) of an inner profiled pipe (1), and the length (B) corresponding to the inside width (b) of an outer profiled pipe (2).

8. A clamping device according to one of Claims 1 to 7, **characterized in that** the supporting element is an injection-moulded part and the spring (5) is formed by integrally moulded legs (13).

9. A clamping device according to one of Claims 1 to 8, **characterised in that** the supporting element (30) is chamfered on substantially each side.

10. A clamping device according to one of Claims 1 to 9, **characterised in that** the clamping part (4) may be secured on the supporting element (30) in two rotary positions extending approximately at a right angle to one another.

11. A clamping device according to one of Claims 1 to 10, **characterised in that** the clamping part (4) protrudes by at least the wall thickness of a profiled pipe (1, 2) on an upper side of the supporting element (30).

## Revendications

1. Dispositif de serrage pour profilés (1, 2) assemblés de façon télescopique, en particulier d'un cadre porteur pour appareils sanitaires, les profilés (1, 2) étant rainurés dans la direction longitudinale et une vis de fixation (3) du dispositif de serrage s'engageant dans une pièce de serrage (4) qui peut être supportée par l'intermédiaire d'un élément porteur (20) au moyen d'un ressort (5) dans l'un des profilés (1, 2), **caractérisé en ce que** la pièce de serrage (4) peut être disposée sans possibilité de torsion sur l'élément porteur (30) dans au moins deux positions différentes, dans une certaine orientation de l'élément porteur (30) par rapport aux profilés (1, 2), la pièce de serrage (4) peut s'engager dans l'une desdites au moins deux positions différentes dans l'une des rainures longitudinales (7, 8) d'un des profilés (1, 2).

2. Dispositif de serrage selon la revendication 1, **caractérisé en ce que** l'élément porteur (30) est fabriqué dans une matière plastique appropriée.

3. Dispositif de serrage selon l'une quelconque des revendications 1 ou 2, **caractérisé en ce que** le ressort (5) fait partie de l'élément porteur (30).

4. Dispositif de serrage selon l'une quelconque des revendications 1 à 3, **caractérisé en ce que** l'élément porteur (30) présente une pièce d'arrêt (6) sur laquelle repose la pièce de serrage (4).

5. Dispositif de serrage selon l'une quelconque des revendications 1 à 4, **caractérisé en ce que** la pièce de serrage (4) s'enclenche sur l'élément porteur (30).

6. Dispositif de serrage selon l'une quelconque des revendications 1 à 5, **caractérisé en ce que** l'élément porteur (30) est fabriqué en matière plastique et la pièce de serrage (4) est fabriquée dans un métal approprié.

7. Dispositif de serrage selon l'une quelconque des revendications 1 à 6, **caractérisé en ce que** l'élément porteur (3) en vue de dessus est réalisé de façon approximativement rectangulaire et présente une largeur (A) ainsi qu'une longueur (B), la largeur (A) correspondant environ à la largeur intérieure (a) d'un profilé (1) et la longueur (B) correspondant à la largeur intérieure (b) d'un profilé extérieur (2).

8. Dispositif de serrage selon l'une quelconque des revendications 1 à 7, **caractérisé en ce que** l'élément porteur est une pièce injectée et le ressort (5) est formé par des montants moulés (13).

9. Dispositif de serrage selon l'une quelconque des revendications 1 à 8, **caractérisé en ce que** l'élément porteur (30) présente substantiellement des biseaux de tout côté.

10. Dispositif de serrage selon l'une quelconque des revendications 1 à 9, **caractérisé en ce que** la pièce de serrage (4) peut être fixée sur l'élément porteur (30) dans deux positions de rotation s'étendant perpendiculairement l'une à l'autre.

11. Dispositif de serrage selon l'une quelconque des revendications 1 à 10, **caractérisé en ce que** la pièce de serrage (4) dépasse sur une face supérieure de l'élément porteur (30) d'au moins l'épaisseur de paroi d'un profilé (1, 2).
